## Europäisches Patentamt
## European Patent Office
## Office européen des brevets

(11) Publication number: **0 155 437**
**B1**

(12) **EUROPEAN PATENT SPECIFICATION**

(45) Date of publication of patent specification: **12.04.89**

(51) Int. Cl.⁴: **A 01 D 34/64**, A 01 D 34/70

(21) Application number: **84830334.3**

(22) Date of filing: **11.12.84**

(54) **Ride-on rotary lawn mower.**

(30) Priority: **20.12.83 IT 2391283 u**

(43) Date of publication of application:
**25.09.85 Bulletin 85/39**

(45) Publication of the grant of the patent:
**12.04.89 Bulletin 89/15**

(84) Designated Contracting States:
**AT BE CH DE FR GB LI NL SE**

(56) References cited:
**GB-A-1 390 440**
**GB-A-1 545 670**
**GB-A-2 048 638**
**US-A-3 550 364**
**US-A-3 654 749**

(73) Proprietor: **SIAG S.p.A.**
**Via Leonardo da Vinci, 48/D-E-F**
**I-20062 Cassano d'Adda Milano (IT)**

(72) Inventor: **Fedeli, Luisa**
**Via dei Gracchi, 26**
**I-20146 Milano (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

Courier Press, Leamington Spa, England.

**Description**

The present invention relates to an improved rotary lawnmower of the type having a seated driver. Various types of rotary lawnmower are commercially available, including self-propelled ride-on lawnmowers.

Such lawnmowers have a motor which directly or indirectly drives one or more cutter blades to turn about an axis substantially perpendicular to the ground, and also powers the drive transmission for propelling the lawnmower. Self--propelled ride-on lawnmowers are usually constituted by a frame which carries the motor, the drive transmission to the driving wheels (which are usually the rear wheels), the steering device (which usually acts on the front wheel or wheels), the seat for the driver, the control members for actuating and adjusting the moving parts of the transmission, the grass cutter device and (if provided) the grass box for collecting the cut grass.

The grass cutter device is usually constituted by a casing or cowling which encloses the cutter blade or blades from above and the sides. This casing serves to prevent the operator of the lawnmowing machine from being able to come accidentally into contact with the rotary blades and also acts to prevent any grass or foreign bodies thrown from the blades, when in rotation, from being projected out of the lawnmower in unwanted directions which may be dangerous.

The casing is often formed with an outlet opening which allows the cut grass to pass out from the machine in a chosen direction either on one of the two sides of the lawnmower machine or towards the rear of the machine. Both of these arrangements permit a suitable cut grass collector box to be fitted. The grass box is very important, to ensure a good cleaning of the sward and regular growth of the grass itself.

To adapt the machine to various practical working requirements the operator must be able to adjust the height of cut of the grass by displacing the lawnmower casing upwards or downwards, but parallel to the ground. Such displacement must not be difficult or tiring for the operator and must be easily effected from the driving position.

The grass box can be carried either by the grass cutter casing or by the frame of the machine. In the first case, the grass box will be displaced upwardly and downwardly with the lawnmower whenever the driver varies the height of cut, whilst in the second case the height of the grass box will remain the same independently of the height of cut of the grass.

The grass cutter casing may be totally suspended from the frame of the machine in which case the adjustment of the height of cut is obtained by a simple raising or lowering of the casing as a whole, at the same time displacing all of the parts of the casing and those which it carries.

To ensure a regular cut of the sward it is essential that the lawnmower casing is maintained accurately parallel to the ground on which the three or four wheels of the machine rest. This is not always easy to obtain (especially when the operator must cut the grass at the minimum possible height) both when the ground has irregularities (and when, consequently, the front wheels may be located in a plane different from that of the rear wheels) and when the path of the machine is not rectilinear (and when, consequently, the front wheels are not necessarily resting on ground lying in the same plane as that of the rear wheels). Such a situation occurs, likewise, when the loads and thrusts on the lawnmower casing are not perfectly symmetrical with respect to the axis of the machine.

In all these cases it is possible for the grass to be cut in an irregular manner, which confers on the sward an unpleasant aspect.

Sometimes these disadvantages are minimised by fitting two small height-of-cut regulation wheels, preferably on the rear part of the lawnmower casing. These wheels are sometimes fixed, and therefore eliminate the irregularities only in the position of minimum height.

In other cases these small wheels are variable in height preferably by means of connection to the height regulation device. This involves a variation of the said grass cutter device in the sense that the front part of the grass cutter casing is suspended from the frame of the machine and the rear part rests on the ground by means of the said two small wheels. It is evident that this solution guarantees a good regularity of the distance of the casing from the ground, but the small wheels being narrow, cause lines to appear in the cut grass and on the ground when this is not sufficiently hard. This occurs especially in Spring and Autumn when the care of the sward is more important.

For example, the GB—A—2 048 638 Patent discloses a lawnmower comprising a cutter part with cutting blades rotating about a vertical axis. The cutting blades are housed in a downwardly open casing provided with a lateral duct for the discharge of the cut grass. The cutter part is carried by a motor-vehicle having ground-engaging wheels. The casing carries a roller which is pivoted at its rear end and located in the space between the front and rear wheels of the vehicle. The roller is always in contact with the ground independently of the height from the ground at which the casing is adjusted. This roller, however, is really a wheel and extends only for a limited width between the rear wheels. It acts mainly for supporting the cutter, and does not have any function of compacting the ground therefrom the grass has been cut. Thus, lines appear in the cut grass and on the ground, particularly when this is not sufficiently hard.

Accordingly, the task of the present invention is to provide a lawnmower including a rear ground compacting roller which is able of assuring a very much better aspect of the surface of the grass after cutting but, above all, permits a more effective action on the sward to be exercized, in that action of rolling distributed between the roller and wheels favours the regularity of the subsequent growth of the grass.

Within that task it is an object of the present invention to provide a lawnmower in which the transverse thrusts caused by non rectilinear movement of the lawnmower are reduced.

Yet another object of the present invention is to provide such a lawnmower in which a part of the weight of the lawnmower casing can be transferred onto the ground, through the mentioned rear roller.

Yet another object of the present invention is to provide such a lawnmower in which the rear roller is very wide thereby ensuring a good adherence of the lawnmower casing to the ground and an optimum precision in following the irregularities of the ground, simultaneously reducing the irregularities in cutting and the risk of uprooting the grass in the case of very low cutting on slightly irregular ground.

Yet another object of the present invention is to provide such a lawnmower in which the load on the roller can be increased by means of springs interposed between the frame of the machine and the lawnmower casing thereby transferring part of the weight of the machine via the said springs onto the lawnmower casing and thus on the roller rather than on the rear wheels.

According to the invention the above task and objects are achieved by a lawnmower comprising a cutter part provided with one or more blades rotating about an axis substantially perpendicular to the ground and housed in a downwardly open casing provided with lateral or rear ducts for the discharge of cut grass, the cutter part being carried by a motor vehicle having ground engaging wheels, said casing of the cutter part being mounted on the machine between front wheels and rear wheels of the vehicle and carries, pivoted at its rear and located in the space between the rear wheels, a roller which is always in contact with the ground independently of the height from the ground at which the casing is adjusted at any one time.

The invention is further specified in the characterizing part of claim 1.

The roller must be as long as possible so as to fill the whole of the space between the two rear wheels. The roller is preferably carried on support arms which, by suitable levers and connecting rods, are connected to the device by means of which the operator adjusts the height of cut.

If the axis of the roller is positioned as close as possible to the vertical plane passing through the axis of the rear wheels (which are usually the driving wheels) the transverse thrusts caused by non rectilinear movement of the lawnmower are reduced.

The fact that a part of the weight of the grass cutting machinery falls on the roller has certain positive effects. In the first place it makes the operation of adjusting the height of cut upwardly easier since the operator must physically raise only a part of the casing. In the second place, the roller transfers onto the ground a part of the total weight of the machine, in fact relieving the rear wheels.

The provision of the loading springs can permit a more uniform distribution of the load on the ground and therefore a better regularisation action on the sward. Naturally, it is very important that the lawnmower casing, and therefore the roller connected to it, are adequately fixed against transverse displacements with respect to the direction of movement of the vehicle.

The rear roller constitutes also a good security against unexpected loose objects located on the sward, which must be projected out of the machine by the rotating blade, but constitutes also an obstruction at the cut grass outlet. There are, however, known contrivances operable to eliminate the disadvantages which could derive from this, such as, for example, movable diaphragms arranged in the lower part of the output duct for the cut grass, but above the roller.

The operator can make such a diaphragm rotate when he opens the grass box container to empty the cut grass, in such a way that the output duct is also cleared of possible accumulations.

Embodiments of the invention will now be more particularly described, by way of example, with reference to the accompanying drawings, in which:

Figure 1 is a schematic sectional view of the region of the rear wheels of a ride-on lawnmower provided with a rear grass box and with the addition on the lawnmower casing, of a rear roller having means for the adjustment of the height of cut;

Figure 2 illustrates a lawnmower as in Figure 1, in which the rear part of the lawnmower is also provided with springs connected to the frame of the machine to increase the load on the roller;

Figure 3 illustrates a ride-on lawnmower in which there is added, in the lower part of the cut grass discharge duct a movable wall which straddles the roller;

Figure 4 represents the lawnmower machine designated in Figure 4, with the grass box completely raised for emptying.

With particular reference now to the drawings, the lawnmower constituting the subject of the present invention is constituted by a frame 1 which carries the major part of the components of the ride-on rotary lawnmower and, in particular, a motor 2 which, through appropriate mechanisms, operates both the transmission members to the rear driving wheels 3 and one or more rotary cutter blades rotating parallel to the ground and enclosed, above and to the sides, by a casing 4.

The blades when turning cut the grass and can project it into a suitable container or grass box 5 supported by the frame of the machine and pivoted about the pin 6 in such a way that the driver can turn it by gripping the handle 7 whilst remaining seated on the seat 8. Whilst remaining on the seat 8 the driver can also steer the lawnmower by means of a steering wheel 9 connected to a directional wheel or wheels 10. Still remaining seated, the driver can vary the distance from the lawnmower casing 4 to the ground by means of a suitable device which acts on the casing itself.

The casing is connected at the front to the frame 1 by means of arms 11. Such connection ensures that the lawnmower casing moves with the machine whilst it permits the regulation of the height of cut by raising the front part of the lawnmower casing, controlled by the operator, by means of the lever 12.

Suitable linkages connect the lever 12 to the rear roller 13 in such a manner that the said roller, which is pivoted at 14 on the rear part of the lawnmower casing 4, determines the height of the rear part of the lawnmower casing itself. It is evident that, in this case, a part of the weight of the lawnmower casing, and of the components carried by it, is carried by the rear roller.

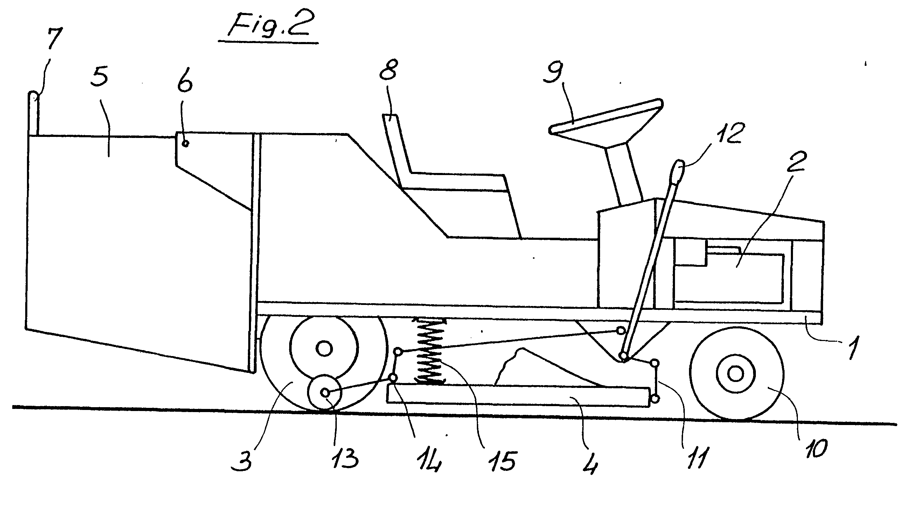

Figure 2 shows a version in which there is interposed, between the frame of the lawnmower machine and the lawnmower casing, springs 15 for the purpose of transferring a part of the weight of the machine onto the rear part of the lawnmower casing and, therefore, onto the roller a suitable part of the weight of the machine. This is done to improve the uniformity of the action of compaction of the sward without entirely losing the grip or traction of the rear driving wheels, which is indispensible in order to be able to control the movements of the lawnmower.

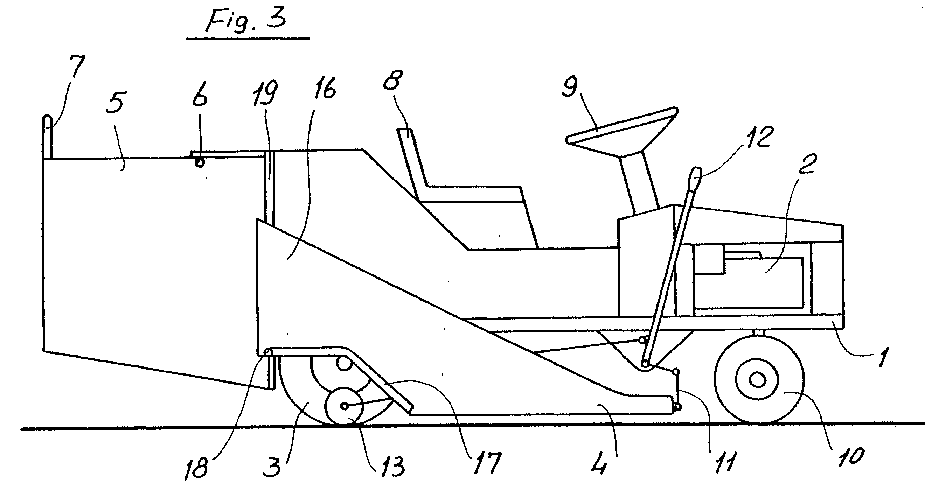

Figure 3 shows, in section, the rear part of the machine, of the lawnmower casing, and of the grass box, in which, at the lower, rear part of the grass discharge duct 16 is pivoted a wall 17 which can turn about an axis 18 which extends transversely with respect to the grass discharge duct. The said wall 17 is maintained during the grass cutting operation in the position indicated in Figure 3, and ensures that the grass itself is conveyed into the grass box and does not fall onto the roller and out from the grass box. When the grass box is full, the residual cut grass will remain in the discharge duct 16 becoming deposited on the wall 17.

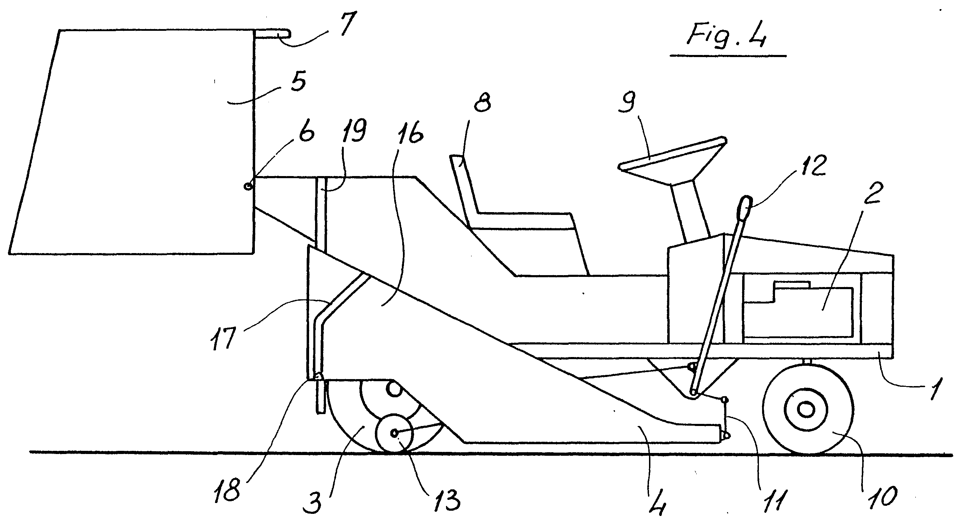

At this point it is necessary for the operator to empty the grass box by turning the handle 7 about the axis 6 in such a way that the mouth of the grass box becomes separated from the frame of the machine and becomes oriented downwardly. Figure 4 shows just the grass box turned for emptying and the wall 17 also turned for emptying the grass which was able to remain there deposited in the last cutting edge.

This is possible because the grass box 5 is connected to the wall 17 in such a way that the two rotations (of the wall 17 and of the grass box 5) take place simultaneously or subsequently, but anyway in a manner such that the evacuation of the cut grass is total. Evidently, this solution can constitute also a safety device against occasional objects which the rotating blades can project, because the wall 17 can be formed in such a manner as completely to close the grass discharge duct from above, leaving open only the lower part which is not dangerous in the event of objects being thrown from the rotating blades.

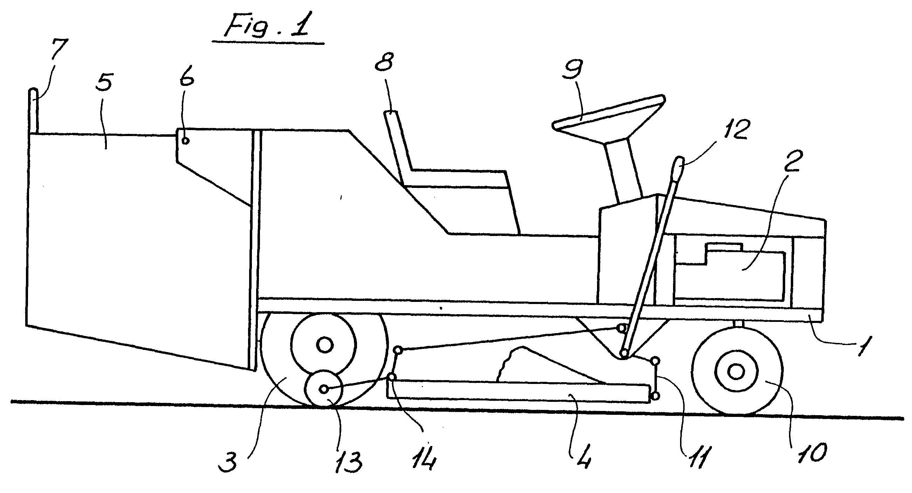

In Figures 1 and 2 it is shown that the roller 13 is sufficiently wide as to occupy almost the whole of the space between the two rear wheels and has an axis lying in the vertical plane passing through the axis of the rear wheels and not very much displaced from the axis. This is to reduce the transverse thrusts on the roller when the machine is travelling in a curve; a circumstance which occurs frequently in lawnmowing operations. Even if this arrangement is adapted it is still necessary to take care to secure the lawnmower casing against transverse displacements, for example by guiding the discharge duct 16 into the space of the rear wall 19 of the frame.

In this way, the improved finish of the sward will be guaranteed since practically all the strip of the lawn on which removal of grass has been effected by the rotating blades is immediately rolled and levelled by the passage of the roller in the central portion of the cut strip and by the two rear wheels on the two outer portions of the cut strip. A suitable calibration of the roller loading system, by means of the springs 15, can permit a more uniform distribution of the loads between the driving wheels and the roller, in such a way that the pressing action on the lawn is as uniform as possible. In this way, whilst the risk arising from extraneous objects projected from the rotating blades is reduced to the minimum both the collection of grass and the maintenance of the sward is optimised.

What has until now been described for a ride-on lawnmower can be freely applied to a pedestrian controlled lawnmower in which, for practical reasons, it is desired to maintain the described arrangement for transmission of drive to the wheels, however, reserving to the roller a function of dividing the load on the ground and, consequently, greater uniformity in the surface of the lawn.

**Claims**

1. A lawnmower comprising a cutter part provided with one or more blades rotating about an axis substantially perpendicular to the ground and housed in a downwardly open casing (4) provided with lateral or rear ducts (16) for the discharge of cut grass, the cutter part being carried by a motor vehicle having front and rear ground-engaging wheels (10, 3), said casing (4) of the cutter part being mounted on the machine between said front and rear wheels of the vehicle carries, pivoted at its rear and located in a space between the rear wheels (3), and a roller (13) which is always in contact with the ground independently of the height from the ground at which the casing is adjusted at any one time, characterized in that said roller (13) is a ground compacting roll substantially filling the whole space between said rear wheels and in that the axis of said roller is positioned as close as possible to the vertical plane passing through the axis of said rear wheels (3).

2. A lawnmower as claimed in Claim 1, characterized in that it includes resilient means (15) acting between said casing (4) and the machine to transfer to said roller (13) a part of the weight of the machine in such a way as to divide the load on the ground between the roller (13) and the wheels (3, 10).

3. A lawnmower as claimed in the preceding claims, characterized in that the casing (4) of the cutter part has a cut grass discharge conveyor duct (16) oriented upwardly and towards the rear of the machine, and the lower rear part of this conveyor has a movable wall (17) pivotally mounted therein whereby to encourage the cut grass to pass over the roller (13) during the operation of the mower, and to permit emptying of the conveyor duct (16) when the grass box (5) is emptied.

## Patentansprüche

1. Rasenmäher einschliessend eine schneidende Portion, die mit einem oder mehreren um einen dem Boden wesentlich senkrechten Achse rotierende Messern und ein untenwärts geöffnetes Gehäuse (4), das um das gemähete Gras zu abladen mit Seit- oder Hinteführungen (16) vorgesehen ist, wobei der schneidende Teil von einem Motorfahrzeig deren Hinter- und Vorderrädern (10, 3) den Boden eindrücken, wobei das obengenannte zwischen den obengenannten Vorder- und Hinterrädern auf der Maschine tragende Gehäuse (4) des schneidenden Teiles, eine auf seinem Hinterteil angelenkte und zwischen den obengenannten Hinterrädern (3) angeordnete Walze (13), trägt, due unabhängig dem von dem Boden jeweils eingestellten Abstand des Gehäuses immer mit dem Boden in Berührung steht, dadurch gekennzeichnet, dass die obentenannte Walze eine Verdichtungswalze ist, und dass der Achse der obengenannten Walze der dem Achse der obengenannten Hinterrädern (3) durchehenden Lotebene so nahe wie möglich angeordnet ist.

2. Rasenmäher nach Anspruch 1, dadurch gekennzeichnet, dass schlagzäigen Mitteln (15), die zwischen dem obengenannten Gehäuse (4) und der Maschine einwirken, um so der obengenannten Walze (13) eine Last portion der Maschine zu verlegen und die Last auf dem Boden zwischen der Walze (13) und der Rädern (3, 12) zu unterteilen.

3. Rasenmäher nach vorliegenden Ansprüche, dadurch gekennzeichnet, dass das Gehäuse (4) des schneidenden Teiles mit einer obengerichteten und dem Hinterteil der Maschinen gerichteten Abladenführung (16) vorgesehen ist, und der unterer Hinterteil der obengenannten Führung mit einer schwenkbar angeordneten Wand ausgerüstet ist, um so, während der Arbeit des Rasenmähers, den Durchgang des geschneideten Grases auf der Walze (13) zu erleichtern, und, als der Kasten des Grases (5) leer ist, die Entleerung der Führung (16) zu begünstigen.

## Revendications

1. Tondeuse à gazon comprenant une partie de coupe pourvue d'une ou plusieurs lames rotatives autour d'un axe essentiellement perependiculaire au sol et contenant une boîte (4) ouverte en bas munie de conduites (16) latérales ou postérieures pour décharger le gazon coupé, la partie de coupe étant porté par un véhicle à moteur ayant de roues postérieures et antérieures (10, 3) qui s'engagent avec le sol, ladite boîte (4) de la partie de coupe, montée sur la machine entre lesdites roues antérieures et postérieures du véhicule, porte, pivoté sur la partie postérieure et placé dans un espace entre lesdites roues postérieures (3) et un rouleau (13) qui se trouve toujours en contact avec le sol indépendamment de la hauteur par rapport au sol, à laquelle la boîte est réglée chaque fois, caractérisé en ce que ledit rouleau (13) est un rouleau à damer et en ce que l'axe dudit rouleau est placé le plus près que possible au plan vertical passant à travers l'axe desdites roues postérieures (3).

2. Tondeuse à gazon selon la revendication 1, caractérisé en ce qu'elle comprend de moyens résilients (15) fonctionnant entre ladite boîte (4) et la machine ainsi de déplacer audit rouleau (13) une partie du poids de la machine, de façon de partager la charge sur le sol entre le rouleau (13) et les roues (3, 10).

3. Tondeuse à gazon selon les revendications précédentes, caractérisée en ce que la boîte (4) de la partie de coupe est munie d'une conduite de décharge (16) tournée en haut et vers la partie postérieure de la machine, et la partie postérieure plus basse de ladite conduite est munie d'un parois mobile (17) monté pivotant ainsi de favoriser le passage du gazon coupé sur le rouleau (13) pendant la marche de la tondeuse et de permettre la vidange de la conduite (16) quand le vaisseau du gazon (5) est vide.

*Fig.1*

EP 0 155 437 B1

Fig.2

EP 0 155 437 B1

*Fig. 3*

*Fig.4*